# EUROPEAN PATENT SPECIFICATION

(11) **EP 2 433 061 B1**
(45) Date of publication and mention of the grant of the patent: **07.07.2021**
(21) Application number: 10722203.6
(22) Date of filing: 20.05.2010
(51) Int. Cl.: F25B 43/00, C09K 5/04

(54) **REFRIGERATION APPARATUS**
REFRIGERATION APPARATUS
APPAREIL DE RÉFRIGÉRATION

(30) Priority: 21.05.2009 JP 2009122893
(43) Date of publication of application: 28.03.2012
(73) Proprietor: Panasonic Corporation, Kadoma-shi Osaka 571-8501 (JP)
(72) Inventor: SATO, Shigehiro, Osaka-shi, Osaka 540-6207 (JP)
(74) Representative: Eisenführ Speiser
(86) International application number: PCT/JP2010/058950
(87) International publication number: WO 2010/134646

(56) References cited:
- WO-A2-2005/105947
- WO-A2-2007/053697
- FR-A1- 2 910 016
- US-A- 2 341 429
- US-A- 5 179 844

## Description

### Technical Field

The present invention relates to a refrigeration apparatus as defined in the claims.

### Background Art

For example, hydrofluorocarbons (HFCs) containing fluorine and hydrogen atoms have been used as refrigerants in the refrigeration cycles in air conditioning machines or car air conditioners. In addition, a polar refrigerant oil such as polyalkylene glycol (PAG), polyol ester (POE) or polyvinylether (PVE) has been used in such a refrigeration apparatus, from the viewpoint of compatibility with the refrigerant HFC.

Conventionally, fluorine ions were occasionally generated from the materials (for example, fluoroplastics) used in such a refrigeration cycle. It is known that ester-based refrigerant oils are decomposed then by the fluorine ions extracted into the refrigerant oil and the resulting acid component formed leads to corrosion of the metal sliding materials in the refrigeration apparatus and degradation of the insulation paper of the motor in the refrigeration apparatus. To solve the problem above, there are known methods to reduce the amount of the fluorine ions extracted from fluoroplastics to 1 ppm or less, as expressed by concentration in the refrigerant oil, for example by heat treatment of resin (see, for example, Patent Document 1).

### Citation List

• Patent Document 1:JP-A No. 2004-204679

### Summary of the Invention

### Problems to be solved by the Invention

However, in conventional configurations, the refrigerant hydrofluoroolefin generates hydrogen fluoride by decomposition in reaction with the residual oxygen in the refrigeration cycle, in high-temperature regions, for example, the sliding parts in the compressor. It was difficult to prevent such generation of hydrogen fluoride, which caused a problem of possible degradation of the parts used in the refrigeration cycle.

WO2005/105947 teaches the advantageous use of fluorine substituted olefins in refrigerant compositions but is silent about the problems caused by hydrogen fluoride generation associated with the use of hydrofluorocarbons as described above.

To remove undesirable compounds (hydrogen fluoride among others) from refrigeration systems, US 2,341,429 instructs to let the refrigerant flow over an adsorbent and a drying agent during circulation. The efficiency of adsorption mediated only during the short contact between the adsorbent and the by-passing refrigerant is not evaluated.

Thus, an objective of the present invention is to provide a refrigeration apparatus allowing stabilized operation for an extended period of time, by removing hydrogen fluoride generated in the refrigeration cycle and suppressing degradation of the parts used in the refrigeration cycle.

The present invention, which was made to achieve said objective, relates to a refrigeration apparatus in which a refrigerant containing a mixture of a hydrofluoroolefin having a carbon-carbon double bond as the base component and a hydrofluorocarbon having no double bond circulates, comprises a refrigerant-circulating route extending from a compressor, via a condenser, an expansion mechanism and an evaporator, back to the compressor, in which the refrigerant circulates, wherein a hydrogen fluoride-scavenging unit for accommodating a hydrogen fluoride scavenger is installed on the refrigerant-circulating route, wherein the hydrogen fluoride-scavenging unit is an accumulator for accommodating the hydrogen fluoride scavenger.

### Effect of the Invention

In such a configuration, the refrigeration apparatus, which has a hydrogen fluoride-scavenging unit for accommodating a hydrogen fluoride scavenger on the refrigerant-circulating route, can scavenge the hydrogen fluoride generated in the refrigeration apparatus and remove it out of the refrigerant-circulating route. It is thus possible to prevent degradation of the parts used in the refrigeration apparatus (i.e., in refrigeration cycle). Consequently, it is thus possible to provide a refrigeration apparatus allowing stabilized operation for an extended period of time.

### Brief Description of Drawings

Figure 1 is a chart showing the refrigeration cycle of the refrigeration apparatus according to an example not part of the present invention.
Figure 2 is a schematic view illustrating the vertical cross section of the drier/hydrogen fluoride-scavenging unit 8 shown in Figure 1.
Figure 3 is a chart showing the relationship between refrigerant blending ratio and Global Warming Potential (GWP).
Figure 4 is a chart showing the refrigeration cycle of the refrigeration apparatus shown in an embodiment of the present invention.
Figure 5 is a schematic view illustrating the vertical cross section of the accumulator 17 shown in Figure 3.

### Detailed Description of the Embodiments

The present invention relates to a refrigeration apparatus in which a refrigerant containing a mixture of a hydrofluoroolefin having a carbon-carbon double bond as base component and a hydrofluorocarbon having no double bond circulates. The refrigeration apparatus has a refrigerant-circulating route extending from a compressor, through a condenser, an expansion mechanism and an evaporator, back to the compressor, in which the refrigerant circulates, and a hydrogen fluoride-scavenging unit for accommodating a hydrogen fluoride scavenger that is installed on the refrigerant-circulating route. It is possible in this way to suppress degradation of the parts used in the refrigeration apparatus, because hydrogen fluoride generated in the refrigeration apparatus (in refrigeration cycle) by decomposition of the refrigerant is removed from the refrigeration cycle by the hydrogen fluoride scavenger.

The hydrogen fluoride-scavenging unit is installed on the refrigerant-circulating route at a position where the accommodated hydrogen fluoride scavenger can be in contact with the liquid state refrigerant. The probability of collision between the hydrogen fluoride generated in the refrigeration cycle and the hydrogen fluoride scavenger is higher, when the refrigerant in contact is in the liquid phase than in the gaseous phase. It is thus possible in such a configuration to remove hydrogen fluoride more efficiently from the refrigeration cycle and, in this way, to suppress degradation of the parts used in the refrigeration apparatus further.

The hydrogen fluoride-scavenging unit is an accumulator in which the hydrogen fluoride scavenger is accommodated. The accumulator is a unit for accommodating unvaporized gas, i.e., liquid refrigerant, obtained after gas liquid separation and thus having a function to prevent intake of the liquid refrigerant into the compressor. Because the liquid refrigerant stays in the accumulator during operation, it is possible for the hydrogen fluoride scavenger to remove hydrogen fluoride in the liquid refrigerant efficiently.

Preferably, the hydrogen fluoride scavenger is molded into a granular shape. It is possible in this way to improve reliability of the refrigeration apparatus, because the hydrogen fluoride scavenger becomes more resistant to pulverization, thereby decreasing circulation of the resulting powder in the refrigeration cycle and clogging in valve regions.

The hydrogen fluoride scavenger preferably contains at least one of calcium carbonate, calcium oxide and calcium hydroxide. It is possible to make the hydrogen fluoride scavenger less expensive by containing the components above.

Preferably, the refrigerant is a 2- or 3-component mixture containing a hydrofluoroolefin tetrafluoropropene as base component and hydrofluorocarbons difluoromethane or/and pentafluoroethane at a rate giving a global warming potential of 5 or more and 750 or less. It is possible to minimize the adverse influence on global warming, even if the unrecovered refrigerant is discharged into the atmosphere.

Hereinafter, an example not part of the present invention and an embodiment of the present invention will be described with reference to the drawings.

### (Example, not according to the invention)

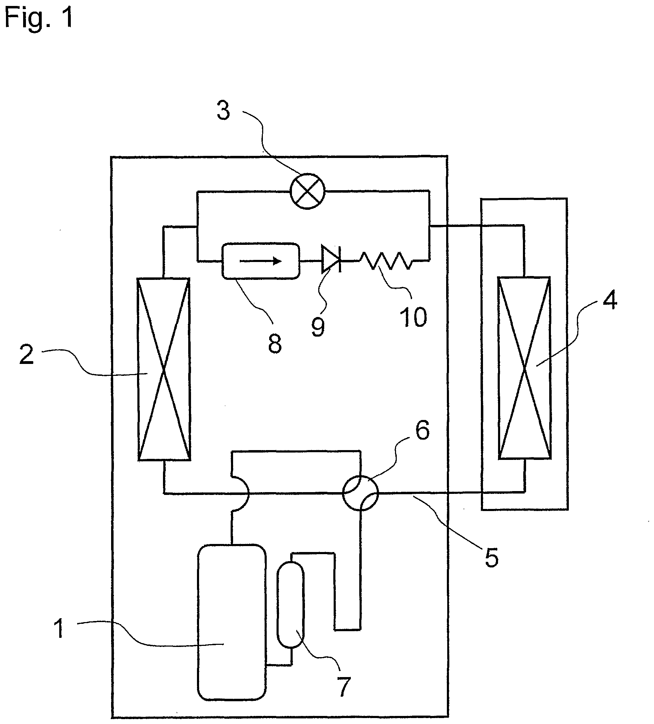

Figure 1 is a chart showing the refrigeration cycle of the refrigeration apparatus in an example (not according to the invention). In Figure 1, the refrigeration apparatus has a cooling compressor 1 compressing the refrigerant, an outdoor heat exchanger 2 condensing or evaporating the refrigerant, an expansion mechanism 3 for example having an expansion valve, expanding the refrigerant, and an indoor heat exchanger 4 evaporating or condensing the refrigerant, as the refrigerant-circulating route. The refrigeration apparatus has additionally a piping 5 connecting the components above to each other, a four-way valve 6, and an accumulator 7, and a refrigerant and a refrigerant oil are used as operation media.

In the refrigeration apparatus shown in Figure 1, a bypass circuit is formed additionally in the region of expansion mechanism 3, and the bypass circuit has a hydrogen fluoride-scavenging unit 8 serving also as a drier (hereinafter, referred to as scavenging unit) for accommodating the hydrogen fluoride scavenger, a check valve 9, and a capillary tube 10. The capillary tube 10 has a function to reduce the influence on operation of the refrigerant-circulating route (refrigeration cycle), by making the amount of the refrigerant flowing through the scavenging unit 8 smaller than the amount of the refrigerant flowing through the expansion mechanism 3.

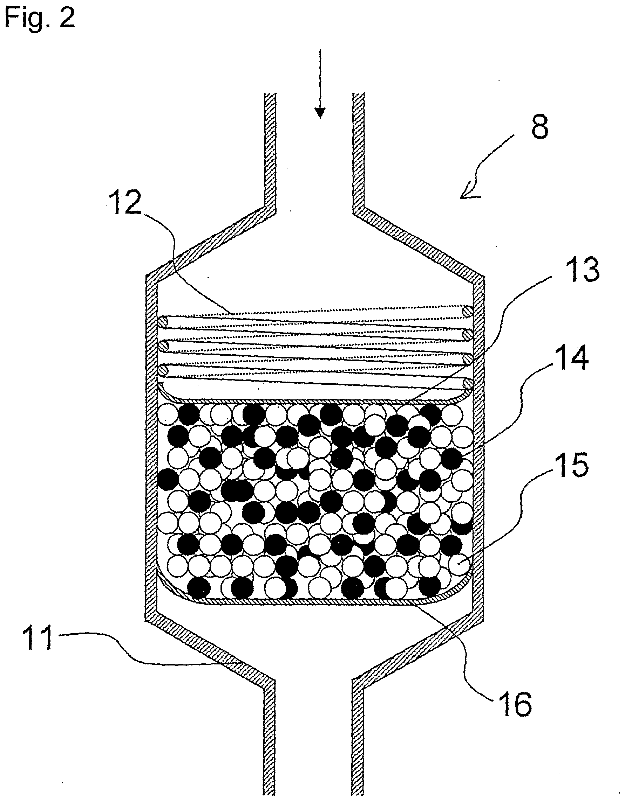

Figure 2 is a schematic view illustrating the vertical cross section of the scavenging unit 8 shown in Figure 1. In the example of the scavenging unit 8 shown in Figure 2 (not according to the invention), a spring 12, a punching metal 13, a drying agent 14 (indicated by ●), a hydrogen fluoride scavenger 15 (indicated by ○) and a net 16 are placed in a copper pipe 11.

The drying agent 14 for use is a drying agent commonly used in refrigeration cycle. Specifically, it is most preferably a molecular sieve, but the micropore diameter of the molecular sieve should be determined properly according to the molecular diameter of the refrigerant used. For example if a refrigerant containing R32 is used, the molecular sieves for use as the drying agent should have a micropore diameter larger than the molecular diameter of water (0.28 nm (2.8A)) and smaller than the molecular diameter of R32 (0.33 nm (3.3A)).

The hydrogen fluoride scavenger 15 for use is not particularly limited, if it reacts with hydrogen fluoride, but it is preferable to select a scavenger that gives by-products in the hydrogen fluoride-scavenging reaction that have smaller adverse effects on the refrigeration cycle. It is particularly preferable to use one of calcium carbonate, calcium oxide, and calcium hydroxide or a mixture thereof that causes no reverse reaction in reaction with hydrogen fluoride. Calcium carbonate, calcium oxide, and calcium hydroxide react with hydrogen fluoride generated by refrigerant decomposition in the reaction formulae shown below:

2HF + CaCO₃ → CaF₂ + CO₂ + H₂O

2HF + CaO → CaF₂ + H₂O

2HF + Ca(OH)₂ → CaF₂ + 2H₂O

As shown in the formulae above, calcium carbonate, when used as the hydrogen fluoride scavenger, gives calcium fluoride and also carbon dioxide and water as by-products. Carbon dioxide is a non-condensable gas and leads to decrease in efficiency, if it is present in the system in a great amount. Generation of water is also unfavorable, because it may lead to such as decomposition of the refrigerant oil, if present in a great amount. However, calcium carbonate, if used, generates only one molecule of carbon dioxide and one molecule of water by scavenging two molecules of hydrogen fluoride, and the favorable effect by capturing of hydrogen fluoride, which has significant adverse effect on refrigeration cycle, is larger than the adverse effect. Alternatively when calcium oxide or calcium hydroxide is used as the hydrogen fluoride scavenger, only water is generated as the by-product. Because water can be removed in a drier, a drier is preferably installed together with the hydrogen fluoride scavenger in the refrigeration cycle. Because the hydrogen fluoride formed in oxidation reaction of the refrigerant is removed rapidly from the refrigeration cycle by the hydrogen fluoride scavenger, it is possible to suppress degradation of the parts used in the refrigeration cycle.

Calcium sulfate also gives calcium fluoride in reaction with hydrogen fluoride, but generates sulfuric acid simultaneously as by-product, possibly exerting adverse effect on the refrigeration cycle parts, and thus, use of it is unfavorable.

In the embodiment of Figure 2 (example not according to the invention), the drying agent 14 and the hydrogen fluoride scavenger 15 are accommodated in the copper pipe 11 in the mixed state, but may be accommodated separately.

In addition, the drying agent 14 and the hydrogen fluoride scavenger 15 are desirably molded respectively into granules having a diameter of approximately 1 mm or more and less than 10 mm. The drying agent 14 and the hydrogen fluoride scavenger 15 are held between a net 16 and a punching metal 13 having a mesh size prohibiting separation of the granules. In addition, the punching metal 13 is pushed by a spring 12, so that the drying agent 14 and the hydrogen fluoride scavenger 15 are held not to move even when the refrigerant is flowing. In this case, as indicated by an arrow in Figure 2, the refrigerant is needed to be introduced from an inlet on the side closer to the spring 12. If the refrigerant is introduced from an inlet opposite to the above inlet, the drying agent 14 and the hydrogen fluoride scavenger 15 may be unfavorably fluidized and pulverized, as the spring 12 is pushed by the refrigerant flow. For prevention of pulverization of the grains, it is needed, as shown in Figure 1, to specify the flow direction of the refrigerant entering into the scavenging unit 8 for example by providing a check valve 9 after the scavenging unit 8.

The refrigerant filled in the refrigeration apparatus shown in Figure 1 is a 2- or 3-component mixture containing a hydrofluoroolefin tetrafluoropropene as base component and difluoromethane or/and pentafluoroethane at a rate giving a global warming potential of 5 or more and 750 or less, preferably 300 or less. The "base component," as used herein, is the at least one component inevitably used as the refrigerant of the present example not according to the present invention. The base component is not limited to the component highest in component rate.

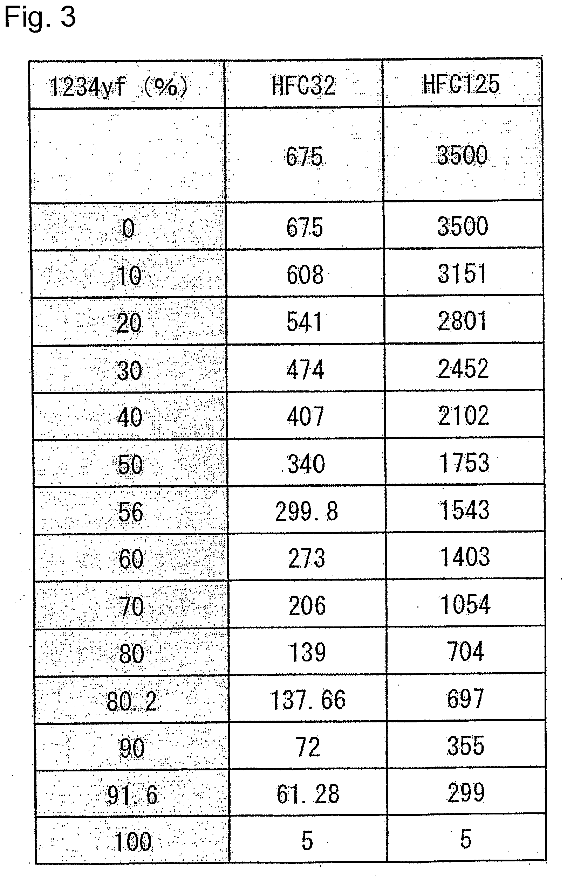

Specifically as shown in Figure 3, when the refrigerant is a two-component mixture containing difluoromethane, it is used in an amount of 44 wt % at a global warming potential of 300 or less, while, when the refrigerant contains pentafluoroethane, it is used in an amount of 19.8 wt % at 750 or less and 8.4 wt % at 300 or less. It is possible in this way to minimize the adverse influence on global warming, even if the unrecovered refrigerant is discharged into the atmosphere. The refrigerant mixture mixed at the ratio above has reduced temperature difference and shows a behavior similar to that of pseudoazeotropic refrigerant mixture, even though it is a non-azeotropic refrigerant mixture, and thus, it is possible to improve the cooling performance and the coefficient of performance (COP) of cooling in the refrigeration apparatus.

The refrigerant oil filled in the cooling compressor 1 shown in Figure 1 contains a refrigerant oil compatible with the refrigerant. The ester-based refrigerant oil in the present example not according to the present invention is prepared in dehydration reaction of a polyvalent alcohol with a saturated or unsaturated fatty acid. A polyvalent alcohol such as neopentylglycol, pentaerythritol, or dipentaerythritol is used according to the viscosity of the refrigerant oil. On the other hand, a straight-chain fatty acid such as hexanoic acid, heptanoic acid, nonanoic acid or decanoic acid or a branched-chain fatty acid such as 2-methylhexanoic acid, 2-ethylhexanoic acid, or 3,5,5-trimethylhexanoic acid is used as the saturated fatty acid. It should be noted that ester oils containing straight-chain fatty acids are superior in sliding characteristics but inferior in hydrolytic resistance, while ester oils containing branched-chain fatty acids are slightly lower in sliding characteristics but superior in hydrolytic resistance.

Various additives including extreme pressure additives such as triphenyl phosphate and tricresyl phosphate, oils such as long chain alcohols, antioxidants such as dibutyl para-cresol and naphthylamine, acid scavengers such as epoxy-containing compounds, and antifoams are added selectively as needed to the refrigerant oil in the present example not according to the present invention.

In the refrigeration cycle having a scavenging unit 8 shown in Figure 1 (example not according to the present invention), the high-temperature high-pressure refrigerant gas discharged from the compressor 1 is condensed and liquefied during flow through the four-way valve 6 and the outdoor heat exchanger 2 during cooling operation. Part of the liquefied refrigerant is depressurized by the expansion mechanism 3 and sent into the indoor heat exchanger 4. The low-temperature low-pressure liquid refrigerant is converted into low-temperature low-pressure gaseous refrigerant, as it is evaporated and heat-exchanged with indoor air, and fed back into the compressor 1 through the accumulator 7. Part of the liquid refrigerant discharged from the outdoor heat exchanger 2 then flows into the bypass circuit and advances, through the scavenging unit 8, the check valve 9, and the capillary tube 10, back to the refrigeration cycle channel.

The channel is reversed with the four-way valve 6 during warming operation, and thus, the refrigerant discharged from the compressor 1 flows though the four-way valve 6 into the indoor heat exchanger 4, where it is condensed and liquefied by heat exchange with indoor air. The liquefied refrigerant does not flow into the bypass line, as it is blocked by the check valve 9, and flows entirely through the expansion mechanism 3 into the outdoor heat exchanger 2, where it is evaporated into low-temperature low-pressure gas and fed through the accumulator 7 back into the compressor 1. Part of the liquid refrigerant that had flown through the expansion mechanism 3 enters into the scavenging unit 8. The refrigerant that have entered into the scavenging unit 8 can remain there and react slowly because of the check valve 9, and it is possible to remove water and hydrogen fluoride in the system even during warming operation.

The position in contact with the liquid refrigerant is, for example, between the condenser outlet and the evaporator inlet or in the accumulator 7. However, in the present example not according to the present invention, for adsorption of water in the refrigeration cycle, a dryer is installed at the outlet of the condenser (outdoor heat exchanger 2 or indoor heat exchanger 4). In this case, it is easiest and desired to fill a hydrogen fluoride scavenger simultaneously into the molecular sieve-filled region of the dryer unit.

### (Embodiment of the invention)

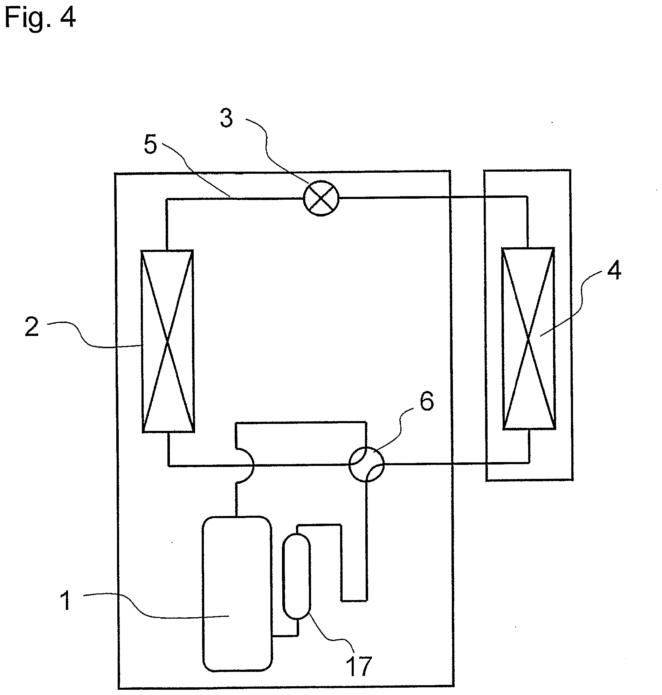

Figure 4 is a chart showing the refrigeration cycle of the refrigeration apparatus according to an embodiment of the present invention. Figure 4 is different from Figure 1 in that there is no bypass circuit and the accumulator 7 is replaced with an accumulator containing a hydrogen fluoride scavenger (hereinafter, referred to as accumulator) 17. The refrigeration apparatuses have no difference other than those above. Thus, the same reference codes were allocated to the parts that are common in Figures 1 and 4, for simplicity of description.

In the refrigeration apparatus shown in Figure 4, during cooling operation, the refrigerant discharged from the compressor 1 flows through a four-way valve 6, an outdoor heat exchanger 2, an expansion mechanism 3, an outdoor heat exchanger 4, and a four-way valve 6, into an accumulator 17 and then back to the compressor 1. It is possible to remove the hydrogen fluoride generated in the refrigeration cycle with a hydrogen fluoride scavenger in reaction, during the period when the liquid refrigerant stays in the accumulator 17.

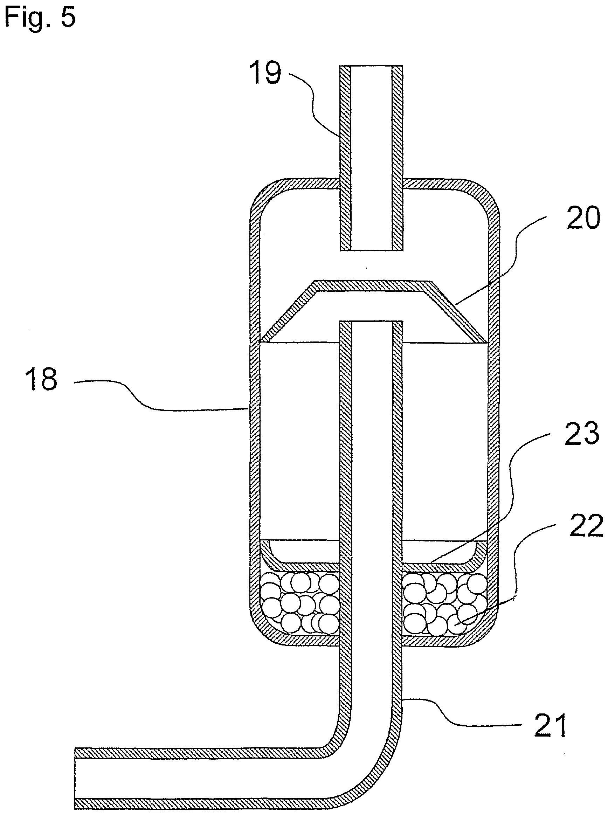

Figure 5 is a schematic view illustrating the vertical cross section of the accumulator 17 shown in Figure 4. In Figure 5, the accumulator 17 has a container 18 for separation of the liquid refrigerant from the refrigerant gas, refrigerant-introducing pipe 19 for introduction of the refrigerant, a baffle plate 20 for movement of the introduced refrigerant, in particular liquid refrigerant, along the internal wall of the container 18, a refrigerant-discharging pipe 21 for intake and supply of the refrigerant gas to the compressor, a hydrogen fluoride scavenger 22, and a net 23.

The hydrogen fluoride scavenger 22 for use is a scavenger similar to the hydrogen fluoride scavenger 15 described above. In addition, the method of holding the hydrogen fluoride scavenger 22 in the container 18 is not particularly specified, but it is most preferably held at a region where the liquid refrigerant remains in the accumulator 17. The hydrogen fluoride scavenger 22 is desirably pressed for example by a net 23 for prevention of separation thereof out of the container 18. However, because there is almost no flow in the region where the liquid refrigerant remains in the container 18, there is no need for pressurization by a spring 12, as in the scavenging unit 8 described above.

Other components such as the refrigerant and the refrigerant oil filled are the same as those described before in the example not part of the present invention.

In the present embodiment, the invention has been described as a refrigeration apparatus mainly of air conditioners for air conditioning, but it is needless to say that the advantageous effect is the same if the refrigeration apparatus is a non-open-type refrigeration apparatus and thus it is a technology that can be used in applications such as freezing refrigerator, freezer, dehumidifier, heat-pump drying washing machine, heat-pump water heater, and drink vending machine.

### Industrial Applicability

The refrigeration apparatus according to the present invention, which can remove hydrogen fluoride generated in a refrigeration apparatus with a particular hydrogen fluoride scavenger from the system and prevent degradation of the parts used in the refrigeration cycle, is applicable in applications such as air conditioning machine, car air conditioner, water heater, freezing refrigerator, freezer, dehumidifier, heat-pump drying washing machine, heat-pump water heater and drink vending machine.

## Claims

1. A refrigeration apparatus, in which a refrigerant containing a mixture of a hydrofluoroolefin having a carbon-carbon double bond as base component and a hydrofluorocarbon having no double bond circulates, comprising a refrigerant-circulating route extending from a compressor (1), via a condenser (2, 4), an expansion mechanism (3), an evaporator (2, 4) and an accumulator (17), back to the compressor (1), in which the refrigerant circulates
**characterized in that** a hydrogen fluoride-scavenging unit for accommodating a hydrogen fluoride scavenger (22) is installed on the refrigerant-circulating route, wherein the hydrogen fluoride-scavenging unit is the accumulator (17) for accommodating the hydrogen fluoride scavenger.

2. The refrigeration apparatus according to claim 1, wherein the hydrogen fluoride-scavenging unit is installed on the refrigerant-circulating route at a position where the accommodated hydrogen fluoride scavenger (22) can be in contact with the liquid phase refrigerant.

3. The refrigeration apparatus according to claim 1 or 2, wherein the hydrogen fluoride scavenger (22) is molded into granular shape.

4. The refrigeration apparatus according to any one of claims 1 to 3, wherein the hydrogen fluoride scavenger (22) contains at least one of calcium carbonate, calcium oxide and calcium hydroxide.

5. The refrigeration apparatus according to any one of claims 1 to 4, wherein the refrigerant is a 2- or 3- component mixture containing a hydrofluoroolefin tetrafluoropropene as base component and hydrofluorocarbons difluoromethane or/and pentafluoroethane at a rate giving a global warming potential of 5 or more and 750 or less.

## Patentansprüche

1. Kältegerät, in dem ein Kältemittel zirkuliert, das ein Gemisch aus einem Hydrofluorolefin mit einer Kohlenstoff-Kohlenstoff-Doppelbindung als Basiskomponente und einem Fluorkohlenwasserstoff ohne Doppelbindung enthält, umfassend eine Kältemittel-Zirkulationsstrecke, die sich von einem Kompressor (1) über einen Kondensator (2, 4), eine Expansionseinrichtung (3), einen Verdampfer (2, 4) und einen Akkumulator (17) zurück zu dem Kompressor (1) erstreckt und in der das Kältemittel zirkuliert,
**dadurch gekennzeichnet, dass** eine Fluorwasserstoff-Fängereinheit zur Aufnahme eines Fluorwasserstoff-Fängers (22) an der Kältemittel-Zirkulationsstrecke installiert ist, wobei die Fluorwasserstoff-Fängereinheit der Akkumulator (17) zur Aufnahme des Fluorwasserstoff-Fängers ist.

2. Kältegerät nach Anspruch 1, wobei die Fluorwasserstoff-Fängereinheit an der Kältemittel-Zirkulationsstrecke an einer Position installiert ist, an der der aufgenommene Fluorwasserstoff-Fänger (22) in Kontakt mit dem Flüssigphasen-Kältemittel sein kann.

3. Kältegerät nach Anspruch 1 oder 2, wobei der Fluorwasserstoff-Fänger (22) in Granulat-Form geformt ist.

4. Kältegerät nach einem der Ansprüche 1 bis 3, wobei der Fluorwasserstoff-Fänger (22) mindestens eines von Calciumcarbonat, Calciumoxid und Calciumhydroxid enthält.

5. Kältegerät nach einem der Ansprüche 1 bis 4, wobei das Kältemittel ein Zwei- oder Drei-Komponenten-Gemisch ist, das ein Hydrofluorolefin, Tetrafluorpropen, als Basiskomponente und die Fluorkohlenwasserstoffe Difluormethan oder/und Pentafluorethan in einer Menge enthält, die ein Treibhauspotential von 5 oder mehr und 750 oder weniger ergibt.

## Revendications

1. Appareil de réfrigération, dans lequel circule un réfrigérant contenant un mélange d'une hydrofluorooléfine présentant une double liaison carbone-carbone en tant que constituant de base et d'un hydrofluorocarbure ne présentant pas de double liaison, comprenant un trajet de circulation de réfrigérant s'étendant à partir d'un compresseur (1), via un condenseur (2, 4), un mécanisme d'expansion (3), un évaporateur (2, 4) et un accumulateur (17), en retour vers le compresseur (1), dans lequel circule le réfrigérant
**caractérisé en ce qu'**une unité de capture de fluorure d'hydrogène destinée à accueillir un capteur de fluorure d'hydrogène (22) est installée sur le trajet de circulation de réfrigérant, l'unité de capture de fluorure d'hydrogène étant l'accumulateur (17) destiné à accueillir le capteur de fluorure d'hydrogène.

2. Appareil de réfrigération selon la revendication 1, dans lequel l'unité de capture de fluorure d'hydrogène est installée sur le trajet de circulation de réfrigérant en une position où le capteur de fluorure d'hydrogène (22) accueilli peut être en contact avec le réfrigérant en phase liquide.

3. Appareil de réfrigération selon la revendication 1 ou 2, dans lequel le capteur de fluorure d'hydrogène (22) est moulé en une forme granulaire.

4. Appareil de réfrigération selon l'une quelconque des revendications 1 à 3, dans lequel le capteur de fluorure d'hydrogène (22) contient au moins une substance parmi le carbonate de calcium, l'oxyde de calcium et l'hydroxyde de calcium.

5. Appareil de réfrigération selon l'une quelconque des revendications 1 à 4, dans lequel le réfrigérant est un mélange à deux ou trois constituants contenant une hydrofluorooléfine, le tétrafluoropropène, en tant que constituant de base et les hydrofluorocarbures difluorométhane et/ou pentafluoroéthane à un taux entraînant un potentiel de réchauffement de la planète de 5 ou plus et de 750 ou moins.
